# EUROPEAN PATENT SPECIFICATION

(11) **EP 4 293 192 B1**
(45) Date of publication and mention of the grant of the patent: **15.10.2025**
(21) Application number: 22179617.0
(22) Date of filing: 17.06.2022
(51) Int. Cl.: E21B 7/02, E02F 3/43, E21B 44/00, E21C 35/06

(54) **PROVIDING CONTROL INFORMATION**
BEREITSTELLUNG VON STEUERINFORMATIONEN
FOURNITURE D'INFORMATIONS DE COMMANDE

(43) Date of publication of application: 20.12.2023
(73) Proprietor: Sandvik Mining and Construction Oy, 33330 Tampere (FI)
(72) Inventor: AHOLA, Panu, 33311 Tampere (FI); PESOLA, Mikko, 33311 Tampere (FI); MAKKONEN, Eero, 33311 Tampere (FI)
(74) Representative: Sandvik

(56) References cited:
- WO-A1-2014/187473
- WO-A1-2020/187947
- WO-A1-2022/067218
- JP-B2- 4 998 924
- US-A1- 2018 080 193

## Description

### TECHNICAL FIELD

The present application relates generally to providing control information. More specifically, the present application relates to providing control information for adjusting a position of an element.

### BACKGROUND

Different kinds of mobile mining machines are configured to perform different kinds of operations. In order to increase safety and enable efficient production in a challenging environment, accurate control of operations of a mobile mining machine is needed.

A rock drilling rig, for example, comprises a carrier and at least one boom for positioning a drilling unit. Accurate positioning of the drilling unit plays a significant role in rock drilling as accurate positioning enables accurate drilling.

WO2022067218 discloses an apparatus installing one or more bolts in a roof of a mine, potentially in an autonomous manner. A sensor captures image data of the roof of the mine. A controller automatically controls a boom associated with a bolter to install the bolts based at least partially on the image data. A system for capturing image data of a mine is also provided, which includes at least one sensor to capture current or present image data of a portion of the mine, such as the roof, and a controller for comparing the current or present image data to previously-collected, pre-existing image data, so as to determine a location in the mine based on the comparison. Related methods are also disclosed.

US2018080193 discloses an automatic dump control system and method for a loader having a boom and a bucket each positionable by hydraulic cylinders actuated by a hydraulic circuit. The control system includes a source of image data of a receptacle and a source of position data for the boom and the bucket. The control system includes a controller that: determines a height of the receptacle based on the image data; determines a difference between the height of the receptacle and a height of the bucket based on the position data; outputs one or more control signals to the hydraulic circuit to position at least one of the boom and the bucket at a target height above the receptacle; determines that the bucket is positioned over the receptacle; and outputs one or more control signals to the hydraulic circuit to dump a load in the bucket into the receptacle.

JP4998924 discloses a drilling positioning control method for a rock drill loaded truck and boom moving control method for tunnel constructing machine. Before drilling, the coordinate and attitude condition of the rock drill loaded truck is measured. Thus, the installation coordinates and directions of cameras are known, camera images picked up for a working face are displayed on a monitor, working drill points are marked on the monitor through signals from a computer, and rear end positions of a guide shell are marked corresponding to the drilling attitude. A drilling bit of a rock drill is set corresponding to the marked working drill point and the guide shell is controlled to be moved so that the rear end of the guide shell corresponds to the marked point of the guide shell rear end position.

WO2020187947 discloses a method, comprising: receiving target pose data indicative of at least target position of a first boom object of the boom for positioning a work machine of the mine vehicle to a target pose in accordance with a mine work plan, receiving geometry data of the first boom object, the geometry data being mapped with start pose data indicative of the start position and orientation of the first boom object, receiving obstacle data, selecting trajectory generation locations for the first boom object, and generating, before starting positioning of the work machine for the target pose, a positioning trajectory for each of the selected trajectory generation locations on the basis of the target pose data, the geometry data, the start pose data, and the obstacle data.

WO2014187473 discloses a rock drilling rig and a method of monitoring drilling. The rock drilling rig is provided with a boom and drilling unit therein. Drilling is monitored by means of a monitoring system comprising at least one monitoring video camera. Monitoring view of the camera is displayed on a display device. Several operational targets and target views for them are predefined for the system, whereby the target views are shown on the display device during progress of the drilling. The operator may monitor the drilling by means of the display device.

### SUMMARY

Various aspects of examples of the invention are set out in the claims. The scope of protection sought for various embodiments of the invention is set out by the independent claims. The examples and features, if any, described in this specification that do not fall under the scope of the independent claims are to be interpreted as examples useful for understanding various embodiments of the invention.

According to a first aspect of the invention, there is provided an apparatus as defined in claim 1.

According to a second aspect of the invention, there is provided a method as defined in claim 14.

According to a third aspect of the invention, there is provided a computer program as defined in claim 15.

### BRIEF DESCRIPTION OF THE DRAWINGS

Some example embodiments will now be described with reference to the accompanying drawings:
Figure 1 shows a block diagram of an example apparatus in which examples of the disclosed embodiments may be applied;
Figure 2 shows a block diagram of another example apparatus in which examples of the disclosed embodiments may be applied;
Figure 3 shows an example system incorporating aspects of the example embodiments;
Figure 4 illustrates an example of a position error; and
Figure 5 shows an example method incorporating aspects of examples of the invention.

### DETAILED DESCRIPTION OF THE DRAWINGS

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

Example embodiments relate to a mobile mining machine configured to perform at least one pre-programmed automation sequence. A mobile mining machine comprising a carrier and at least one boom may be configured to position at least one element by the at least one boom based on a pre-programmed automation sequence. The pre-programmed automation sequence may comprise, for example, a sequence for changing a drill bit, a bolting sequence or a sequence for installing a lifter tube. Each of these automation sequences require accurate positioning of an element relating to the sequence such as a drill bit, a bolt or a lifter tube.

Currently the element is positioned based on a kinematic model of the mobile mining machine using measurement information from at least one sensor associated with the mobile mining machine. The position of the element with respect to the mobile machine is calculated based on the kinematic model and the measurement information. However, accuracy of such a system depends upon accuracy of the sensors, sensor calibrations, boom sensor accuracy, joint clearances and wear. Further, there is no feedback between the actual position of the element and the position determined based on the kinematic model. Inaccurate positioning also affects, for example, drilling accuracy and production.

An example embodiment relates to an apparatus for controlling a mobile mining machine comprising a carrier and at least one boom configured to position at least one element based on a pre-programmed automation sequence, the apparatus being configured to receive information on a first position of an element positioned by a boom based on a pre-programmed automation sequence, receive image information comprising a representation of a target position of the element and at least part of the element, determine, based on the image information, a second position of the element and the target position of the element, determine a position error based on the second position of the element and the target position of the element, and provide, based on the position error, control information for adjusting the first position of the element until at least one criterion for proceeding with the pre-programmed automation sequence is fulfilled.

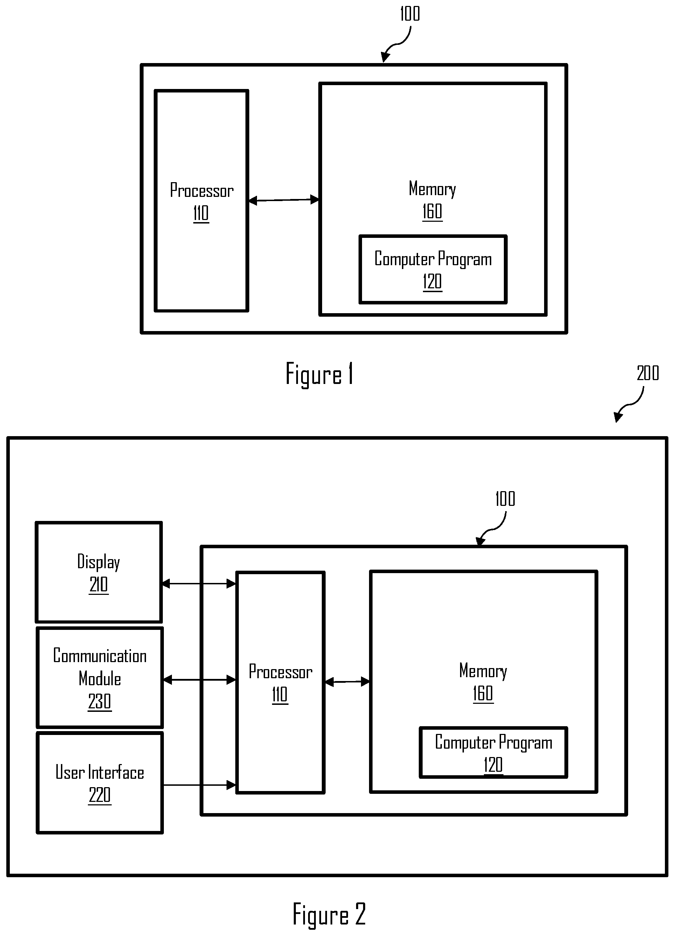

Figure 1 is a block diagram depicting an apparatus 100 operating in accordance with an example embodiment of the invention. The apparatus 100 may be, for example, an electronic device such as a module comprised by an automation or control system, a chip or a chipset. The apparatus 100 comprises one or more control circuitry, such as at least one processor 110 and at least one memory 160, including one or more algorithms such as computer program instructions 120 wherein the at least one memory 160 and the computer program instructions are configured, with the at least one processor 110 to cause the apparatus to carry out any of example functionalities described below.

In the example of Figure 1, the processor 110 is a control unit operatively connected to read from and write to the memory 160. The processor 110 may also be configured to receive control signals received via an input interface and/or the processor 110 may be configured to output control signals via an output interface. In an example embodiment the processor 110 may be configured to convert the received control signals into appropriate commands for controlling functionalities of the apparatus.

The at least one memory 160 stores computer program instructions 120 which when loaded into the processor 110 control the operation of the apparatus 100 as explained below. In other examples, the apparatus 100 may comprise more than one memory 160 or different kinds of storage devices.

Computer program instructions 120 for enabling implementations of example embodiments of the invention or a part of such computer program instructions may be loaded onto the apparatus 100 by the manufacturer of the apparatus 100, by a user of the apparatus 100, or by the apparatus 100 itself based on a download program, or the instructions can be pushed to the apparatus 100 by an external device. The computer program instructions may arrive at the apparatus 100 via an electromagnetic carrier signal or be copied from a physical entity such as a computer program product, a memory device or a record medium such as a USB stick, a Compact Disc (CD), a Compact Disc Read-Only Memory (CD-ROM), a Digital Versatile Disk (DVD) or a Blu-ray disk.

Figure 2 is a block diagram depicting an apparatus 200 in accordance with an example embodiment of the invention. The apparatus 200 may be an electronic device such as a module comprised by an automation system or a control system, a Personal Computer (PC), a laptop, a desktop, a wireless terminal, a communication terminal, a computing device or the like. In the examples below it is assumed that the apparatus 200 is a computing device.

In the example embodiment of Figure 2, the apparatus 200 is illustrated as comprising the apparatus 100, a display 210, a user interface 220 for interacting with the computing device 200 and a communication module 230. The display 210 may also be configured to act as a user interface. For example, the display may be a touch screen display. In an example embodiment, the display 210 and/or the user interface 220 may be external to the apparatus 200, but in communication with it.

Additionally or alternatively, the user interface may also comprise a manually operable control such as a button, a key, a touch pad, a joystick, a stylus, a pen, a roller, a rocker, a keypad, a keyboard or any suitable input mechanism for inputting and/or accessing information.

The communication module 230 may be configured to communicate with one or more other devices such as one or more sensors, control units, work machines such as mobile mining vehicles, or the like. Communicating with one or more devices may comprise receiving information from and/or transmitting information to the one or more devices via a wired or wireless connection.

The apparatus 200 of the example of Fig. 2 may also be configured to establish radio communication with another device using, for example, a cellular network, a Bluetooth or WiFi connection or the like. Alternatively or in addition, the apparatus 200 may be configured to communicate with another device using a wired connection.

According to an example embodiment, the apparatus 200 is configured to communicate with at least one camera. The apparatus 200 may be configured to communicate with the at least one camera via, for example, the communication module 230. The at least one camera may comprise, for example, a video camera, a stereo camera, or a monocular camera.

Communicating with the at least one camera may comprise, for example, receiving image information captured or streamed by the at least one camera. As another example, communicating with the at least one camera may comprise, for example, instructing a camera to capture or stream image information. Image information may comprise image data such as one or more data frames comprising a visual representation of, for example, one or more objects.

According to an example embodiment, the apparatus 200 comprises a module operatively connected to a mobile mining machine. For example, the apparatus 200 may be implemented in a control system of a mobile mining machine or the apparatus 200 may be configured to communicate with a control system of a mobile mining machine.

According to an example embodiment, the apparatus 200 is configured to control one or more functions and/or actuators of a mobile mining machine. The apparatus 200 may be configured to control the one or more functions and/or actuators directly or via one or more control units of the control system of the mobile mining machine. Controlling the one or more functions and/or actuators via one or more control units may comprise, for example, communicating with the one or more control units via, for example, a controller area network (CAN) bus or an Ethernet network.

According to an example embodiment, the mobile mining machine comprises a drilling rig. The drilling rig may comprise a drilling rig for underground drilling or a drilling rig for surface drilling. A drilling rig may comprise, for example, a rock drilling rig.

According to an example embodiment, the mobile mining machine comprises a movable carrier and at least one boom. The at least one boom may be equipped with different kinds of operating units at a distal end of the at least one boom. For example, the at least one boom may be equipped with a rock drilling unit, a bolting unit, a lifter tube installer, a casing installer, a rock support installer, or the like.

A rock drilling unit is configured to drill holes in rock. The rock drilling unit comprises a rock drilling machine and a feed beam configured to provide linear movement to the rock drilling machine along the feed beam when drilling a hole.

A bolting unit is configured to reinforce rock by bolts or elongated reinforcements, resin, cement, or the like. A bolting unit comprises a rock bolting machine and a feed beam for feeding rock bolts or corresponding elongated reinforcements into drilled holes.

According to an example embodiment, the mobile mining machine is configured to perform at least one pre-programmed automation sequence. The mobile mining machine may be configured to initiate the at least one pre-programmed automation sequence based on, for example, an input received from an operator of the mobile mining machine or automatically as a part of operation of the mobile mining machine.

A pre-programmed automation sequence may comprise a sequence of pre-programmed operations for performing at least one task. A sequence of pre-programmed operations may comprise, for example, a plurality of consecutive operations performed by the mobile mining machine for performing a task. The plurality of consecutive operations performed by the mobile mining machine may comprise, for example, controlling one or more functions and/or actuators of the mobile mining machine.

A pre-programmed automation sequence may comprise, for example, a sensor-based and/or time-based automation sequence.

A sensor-based automation sequence may be configured to use data received from at least one sensor for initiating, performing and/or ending the automation sequence. For example, the mobile mining machine may be configured to perform a sensor-based automation sequence for controlling a boom in response to determining that the boom of the mobile mining machine is in a particular position.

A time-based automation sequence may be configured to determine a particular time instance or duration relating to operation of the mobile mining machine for initiating, performing and/or ending the automation sequence. For example, the mobile mining machine may be configured to perform a time-based automation sequence for controlling a boom in response to determining that a particular period of time has elapsed since moving the boom to a particular position, or the like.

A pre-programmed automation sequence may also comprise a combination of a sensor-based and a time-based automation sequence. For example, one or more pre-programmed operations of the automation sequence may be sensor-based and one or more pre-programmed operations may be time-based.

A pre-programmed automation sequence performed by a mobile mining machine may comprise, for example, a sequence for changing a drill bit, a bolting sequence, a sequence for installing a lifter tube, changing a drill rod or any other applicable sequence.

As explained above, a pre-programmed sequence comprises pre-programmed operations for performing a task. As an example, a sequence for changing a drill bit may comprise a plurality of operations such as loosening the drill bit, retracting the drill, closing a rod retainer, tightening shank threads, opening the rod retainer, controlling a position of the drill bit to a bit changer position, activating position adjustment of the drill bit, depositing or retrieving the drill bit, retracting the drill and verifying that the operation was successful.

According to an example embodiment, position adjustment comprises adjusting a position of an element based on image information. Position adjustment of an element such as a drill bit, bolt, lifter tube or drill rod, for example, is discussed in more detail in the examples below.

A pre-programmed automation sequence may comprise one or more sub-sequences that are executed as part of the automation sequence. For example, activating position adjustment included in the sequence for changing a drill bit may comprise a sub-sequence comprising a plurality of operations for adjusting a position of the drill bit/boom.

It should be noted that a sequence for installing a lifter tube or a bolting sequence may comprise different operations than a sequence for changing a drill bit. Alternatively, the sequence for installing the lifter tube or a bolting sequence may have partially same operations with a sequence for changing a drill bit such as, for example, verifying that the operation was successful.

As explained above, the apparatus 200 is configured to communicate with different devices such as different sensors and/or control units.

According to an example embodiment, the apparatus 200 is configured to receive information on a first position of an element positioned by a boom based on a pre-programmed automation sequence.

The apparatus 200 may be configured to receive information on the first position from a separate device such as a sensor, or the apparatus 200 may be configured to determine the first position based on, for example, measurement data from one or more sensors.

Information on the first position of the element may comprise information on the position of the element relative to the mobile mining machine. The position of the element relative to the mobile mining machine may comprise, for example, the position of the element relative to a predetermined reference point associated with the mobile mining machine. As another example, information on the first position of the element may comprise the position of the element in coordinates of a coordinate system such as a position of the element in mine coordinates.

Information on the first position may comprise measurement data indicating the first position, a simulated position, or a position determined based on a model of the mobile mining machine and measurement data from one or more sensors associated with the mobile mining machine.

A model of the mobile mining machine may comprise, for example, a kinematic model of the mobile mining machine.

A kinematic model of a mobile mining machine comprises a mathematical description of at least a part of the mobile mining machine. A kinematic model describes motion of a machine without taking into account the forces that cause the motion. The kinematic model may be used for estimating a position of the machine based on measurement data from one or more sensors associated with the machine or motion of the machine caused by given control inputs. The kinematic model of the mobile mining machine comprises at least dimensions of the mobile mining machine and/or reach of the mobile mining machine such as a movement range of at least one boom of the mobile mining machine.

According to an example embodiment, the first position comprises a position determined using a kinematic model of the mobile mining machine and measurement data from at least one sensor associated with the mobile mining machine.

The element may comprise an element relating to the pre-programmed automation sequence. The element may comprise a replaceable element or a fixed element. A replaceable element refers to an element that may be removed or replaced due to wear or different operation phases, while a fixed element refers to an element that is meant to last for a longer period of time, but may be replaced if it is broken, for example. A replaceable element may comprise, for example, a drill bit, a lifter tube, a bolt, a drill rod, or the like. A fixed element may comprise, for example, a boom, a feed beam, or the like.

According to an example embodiment, the at least one element comprises a drill bit, a lifter tube or a bolt.

Therefore, the first position of an element may comprise, for example, a position of a drill bit relative to the mobile mining machine, a position of the lifter tube relative to the mobile mining machine or a position of a bolt relative to the mobile mining machine.

As explained above, the apparatus 200 is configured to communicate with at least one camera. The at least one camera may be associated with the mobile mining machine, or the at least one camera may be located in the environment of the mobile mining machine.

The apparatus 200 may be configured to receive image information from a single camera or a plurality of cameras. The image information may comprise information on an environment of the mobile mining machine and/or information relating to the mobile mining machine. Information on the environment of the mobile machine may comprise a representation of the environment and information relating to the mobile mining machine may comprise a representation of at least part of the mobile mining machine, an element relating to the mobile mining machine, or the like. According to an example embodiment, the apparatus 200 is configured to receive image information comprising a representation of a target position of the element and at least part of the element.

A target position comprises a position of a target of the element. For example, the target may comprise, for example, a cavity configured to receive the element.

According to an example embodiment, the target position of the element comprises an existing hole and the element is to be placed in the hole.

According to an example embodiment, the existing hole comprises a drilled hole or an artificial hole. A drilled hole may comprise, for example, a hole drilled in rock and an artificial hole may comprise, for example, hole in a drill bit holder.

The target position of the element may comprise a target position of the element associated with the pre-programmed automation sequence. For example, if the element is a drill bit, the target position may comprise a position enabling changing the drill bit. As another example, if the element is a lifter tube, the target position may comprise a position enabling installation of the lifter tube. As a further example, of the element is a bolt, the target position may comprise a position enabling installing the bolt.

The image information may comprise, for example, a video feed from a camera. A video feed comprises a sequence of images processed electronically into a predefined format. As another example, the image information may comprise one or more images captured by the camera.

According to an example embodiment, the image information comprises image data such as one or more data frames.

According to an example embodiment, the apparatus 200 is configured to determine, based on the image information, presence of one or more elements and/or a state of one or more elements in the image information.

Determining presence of an element may comprise determining whether a representation of at least part of the element is included in the image information. Determining presence of the element may comprise determining that a representation of the element is included in the image information, or a representation of the element is not included in the image information.

Determining a state of an element may comprise determining the state of the element based on a representation of the element in the image information. Determining the state of the element may comprise comparing the representation of the element with reference information. Determining a state of an element may comprise, for example, determining that the element is of a right type, determining that the element is not damaged and/or determining that the element is correctly positioned.

Determining presence of one or more elements and/or a state of one or more elements may comprise, for example, processing the image information. Processing the image information may comprise, for example, filtering the image information, parsing the image information, object detection, or other suitable processing methods.

The apparatus 200 may be configured to process the image information using, for example, artificial intelligence (AI). Artificial intelligence may comprise, for example, different kinds of mechanisms for analyzing the image information. AI may comprise, for example, one or more machine vision algorithms such as one or more algorithms for object detection and/or object tracking.

A machine vision algorithm is configured to extract information from image information to obtain desired data for performing an action.

According to an example embodiment, the apparatus 200 is configured to analyze image information using a machine vision algorithm. In the example of Figure 2, the machine vision algorithm comprises an algorithm for automatic acquisition and analysis of images in order to determine a target position of the element and at least part of the element. The machine vision algorithm may be stored, for example, in the memory 160.

A machine vision algorithm may comprise, for example, a neural network. A neural network comprises a plurality of algorithms that are configured to recognize underlying relationships and/or patterns in a set of data.

A neural network comprises a plurality of node layers such as an input layer, one or more hidden layers, and an output layer. Each node has an associated weight and a threshold value, and each node connects to the nodes in the next layer. If an output of an individual node is above the threshold value, the node is activated, and it sends data to the next layer of the network.

Neural networks are configured to learn based on training data and they improve their accuracy over time. A learning algorithm of the neural network may comprise supervised learning or unsupervised learning. Supervised learning uses labeled input and output data, which means that the desired output is known, while an unsupervised learning algorithm does not use labeled input and output data.

According to an example embodiment, the apparatus 200 is configured to determine, based on the image information, a second position of the element and the target position of the element.

Determining the second position of the element and the target position of the element based on the image information may comprise identifying, using a machine vision algorithm, a representation of the element and the target of the element in the image information. The machine vision algorithm may be aware of, for example, the shape of the element and the shape of the target and identify the element and the target based on the shape of the respective element. For example, the machine vision algorithm may be aware of a shape of a drill bit, a bolt or a lifter tube, and a shape of a hole.

Determining the second position of the element and the target position of the element based on the image information may further comprise determining the position of the element and the position of the target with respect to a reference point.

The reference point may comprise a static reference point or a dynamic reference point. A static reference point may comprise, for example, a marking in a tunnel wall, or the like. A dynamic reference point may comprise, for example, a reference point associated with the mobile mining machine such as a point in a movable boom, or the like.

According to an example embodiment, the apparatus 200 is configured to perform, concurrently with receiving image information, at least one operation affecting at least one of the following: the second position of the element or the target position of the element.

According to an example embodiment, the at least one operation comprises an operation causing a change of position of the element and/or the target position. The at least one operation may comprise, for example, causing a controlled collision between the element and the target position. For example, the apparatus 200 may be configured to cause a controlled collision between a drill bit or drill rod and a bit holder. A controlled collision comprises an intentionally caused collision.

A controlled collision may comprise a collision with a defined collision position. A defined collision position may comprise, for example, a selected position such that the element and the target position collide while an unobstructed view of representations of selected objects included in the image information is enabled. For example, assuming the apparatus 200 is configured to cause a controlled collision between a drill bit and a bit holder on the right-hand side of a mobile mining machine, the defined position may comprise a lower left corner of the bit holder such that holes in the bit holder are not occluded by the drill bit.

According to an example embodiment, the apparatus 200 is configured detect a change of position of at least one representation of an object included in the image information. An object may comprise, for example, at least one element such as a drill bit, a bolt, a drill rod or boom, a target position of the element such as a bit holder, or some other object.

According to an example embodiment, the apparatus 200 is configured to detect a change of position of a plurality of representations of objects included in the image information.

Without limiting the scope of the claims, an advantage of detecting a change of position of a plurality of objects is that a detected change of a position of an object may be confirmed with a detected change of one or more other objects.

According to an example embodiment, the apparatus 200 is configured to store information relating to the operation affecting the second position of the element and/or the target position of the element.

Information relating to the operation affecting the second position of the element and/or the target position of the element may comprise, for example, information on a position of a unit causing the change of position. For example, in case the operation affecting the second position of the element and/or the target position comprises a controlled collision between a drill bit/drill rod and a bit holder, a position of the rock drilling machine may be stored when the rock drilling unit is controlled forward and when the rock drilling machine is retracted.

According to an example embodiment, the apparatus 200 is configured to determine the second position of the element based on the image information and information on at least one operation affecting the second position of the element and/or the target position of the element.

Without limiting the scope of the claims, an advantage of determining the second position of the element based on the image information and information on at least one operation affecting the second position of the element and/or the target position of the element is that more accurate information on the second position of the element may be received. For example, in case an operation causing a change of position of the element and/or the target position comprises an intentional collision between a drill bit/drill rod and a bit holder, the apparatus 200 may be configured to determine three-dimensional (3D) position information for the second position of the element.

The apparatus 200 may be configured to determine the second position of the element and the target position of the element based on a predefined condition. For example, the apparatus 200 may be configured to determine the second position of the element and the target position in response to detecting that the pre-programmed automation sequence has reached a particular state.

According to an example embodiment, the apparatus 200 is configured to determine the second position in response to a determination that the first position is within a threshold distance from the target position. The threshold distance may comprise, for example, 1 to 30 cm such as 5, 10, 15, 20, or 25 cm, or even higher.

Without limiting the scope of the claims, an advantage of determining a second position of the element based on the image information is that a position of the element may be determined independently of the sensors associated with the mobile mining machine such as boom sensors. This enables accurate determination of the element despite varying sensor accuracy, sensor calibrations, boom structural accuracy and/or wear.

According to an example embodiment, the apparatus 200 is configured to determine a position error based on the second position of the element and the target position of the element.

According to an example embodiment, the position error comprises a parameter value indicating a misplacement of the element with respect to the target position of the element.

A misplacement of the element may comprise, for example, distance information and/or orientation information. Distance information may comprise, for example, a distance between the second position and the target position. Orientation information may comprise, for example, an angle between the second position and the target position.

According to an example embodiment, the apparatus 200 is configured to determine control information for adjusting the first position of the element. The control information may comprise one or more instructions to control the position of the element such that the target position is reached.

According to an example embodiment, the apparatus 200 is configured to determine the control information based on the image information.

The control information may comprise, for example, control information to move the element for a particular distance and/or a particular direction from the first position. Alternatively, the control information may comprise coordinates of the target position or control information corresponding to the image information such as a number of pixels to be moved by the element.

The control information may comprise an absolute value or a relative value. For example, the control information may comprise control information for moving the element 5 cm to the left or 10 cm down from the current position.

According to an example embodiment, the apparatus 200 is configured to provide, based on the position error, control information for adjusting the first position of the element until at least one criterion for proceeding with the pre-programmed automation sequence is fulfilled.

According to an example embodiment, the apparatus 200 is configured to determine, based on the image information, that the at least one criterion is fulfilled.

The at least one criterion may relate to the position of the element or the aim of the pre-programmed automation sequence.

According to an example embodiment, the at least one criterion comprises that a position of the element corresponds to the target position or an operation is completed.

A completed operation may comprise, for example, a successfully changed drill bit, a successfully installed lifter tube or a successfully bolted bolt.

The apparatus 200 may be configured to provide the control information to a control unit configured to control at least one actuator of the mobile mining machine or the apparatus 200 may be configured to directly control the at least one actuator of the mobile mining machine.

According to an example embodiment, the apparatus 200 is configured to control at least one actuator using the control information.

It should be noted that the apparatus 200 may be configured to determine a plurality of positions errors, for example, for a mobile mining machine comprising a plurality of booms. Assuming an element controlled by a boom is the boom itself, the apparatus 200 may be configured to determine, based on the image information a first position error for a first boom and a second position error for a second boom. The apparatus 200 may further be configured to provide, based on the first position error, first control information for adjusting the position of the first boom and provide, based on the second position error, second control information for adjusting the position of the second boom. The apparatus 200 may further be configured to use the positions of the booms for compensating the error in the kinematic model.

According to an example embodiment, the apparatus 200 comprises means for performing features of the apparatus 200, wherein the means for performing comprises at least one processor 110, at least one memory 160 including computer code 120 configured to, with the at least one processor 110, cause the performance of the apparatus 200.

According to an example embodiment, the apparatus 200 comprises means for receiving information on a first position of an element positioned by a boom based on a pre-programmed automation sequence, means for receiving image information comprising a representation of a target position of the element and at least part of the element, means for determining, based on the image information, a second position of the element and a target position of the element, means for determining a position error based on the second position of the element and the target position of the element, and means for providing, based on the position error, control information for adjusting the first position of the element until at least one criterion for proceeding with the pre-programmed automation sequence is fulfilled.

According to an example embodiment, the apparatus 200 may further comprise means for determining the second position in response to a determination that the first position is within a threshold distance from the target position. According to an example embodiment. the apparatus 200 may further comprise means for analysing the image information using a machine vision algorithm and or means for determining, based on the image information, that the at least one criterion is fulfilled. According to an example embodiment. the apparatus 200 may further comprise means for determining the control information based on the image information comprises one or more parameters for controlling the direction of the boom or coordinate information for positioning the boom and/or means for controlling at least one actuator using the control information.

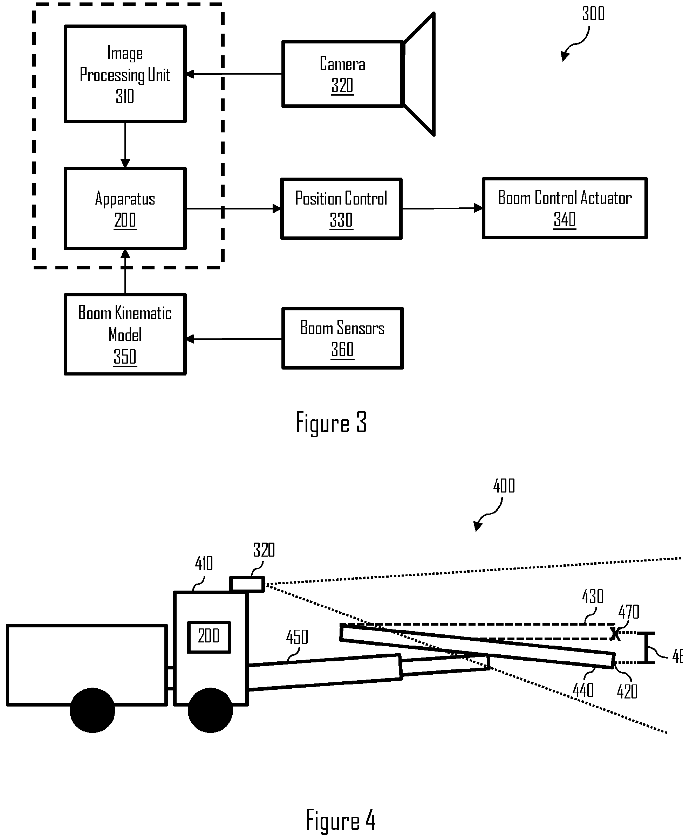

Figure 3 illustrates an example system 300 incorporating aspects of the example embodiments. In the example of Figure 3, the system 300 is comprised by a mobile mining machine and the apparatus 200 corresponds to the apparatus 200 of the example of Figure 2.

In the example of Figure 3, the mobile mining machine comprises a rock drilling rig comprising at least one boom provided with a rock drilling unit at a distal end of the at least one boom. The rock drilling unit comprises a feeding system configured to keep a drill bit in contact with rock during drilling.

The system 300 comprises the apparatus 200, an image processing unit 310 operatively connected to a camera 320, a position control unit 330 operatively connected to a boom control actuator 340, a boom kinematic model 350 configured to receive information from boom sensors 360. It should be noted that the image processing unit 310 may be comprised by the apparatus 200 as indicated by the dashed line or the image processing unit 310 may be operatively connected to the apparatus 200 but separate from the apparatus 200.

The apparatus 200 is configured to receive information from the kinematic model 350 and the image processing unit 310. In the example of Figure 3, information from the kinematic model 350 comprises information on a first position of an element positioned by a boom based on a pre-programmed automation sequence and information from the image processing unit 310 comprises image information comprising a representation of a target position of the element and at least part of the element.

The pre-programmed automation sequence may comprise, for example, an automation sequence for changing a drill bit, a bolting sequence or a sequence for installing a lifter tube performed by a mobile mining machine.

The apparatus 200 is further configured to determine, based on the information from the image processing unit 310, a second position of the element and the target position of the element and determine a position error based on the second position of the element and the target position of the element.

The apparatus 200 is yet further configured to provide, based on the position error, control information to the position control unit 330 for adjusting the first position of the element until at least one criterion for proceeding with the pre-programmed automation sequence is fulfilled. In the example of Figure 3, the control information is used for controlling at least one boom control actuator 340 configured to control the position of the boom.

Figure 4 illustrates an example arrangement 400 of determining a position error for a mobile mining machine 410 comprising the apparatus 200. It is assumed that an element 440 is positioned by a boom 450 based on a pre-programmed automation sequence.

The pre-programmed automation sequence performed by a mobile mining machine may comprise, for example, a sequence for changing a drill bit, a bolting sequence, a sequence for installing a lifter tube or any other applicable sequence.

The apparatus 200 is configured to receive information on a first position 430 of the element positioned by the boom 450. The first information may comprise a position of the element determined using a kinematic model of the mobile mining machine.

In the example of Figure 4, a mobile mining machine 410 further comprises a camera 320 and the apparatus 200 is configured to receive image information comprising a representation of a target position 470 of the element 440 and at least part of the element 440.

The apparatus 200 is further configured to determine, based on the image information, a second position 420 of the element 440 and the target position 470 of the element, and determine a position error 460 based on the second position 420 of the element and the target position 470 of the element. The position error 460 comprises a parameter value indicating a misplacement of the element with respect to the target position of the element.

Even though the example of Figure 4 illustrates a mobile mining machine comprising one boom, the position error may also be determined in a multi-boom system. Assuming the element controlled by the boom is the boom itself, the apparatus 200 may be configured to determine, based on the image information a first position error for a first boom and a second position error for a second boom. The apparatus 200 may further be configured to provide, based on the first position error, first control information for adjusting the position of the first boom and provide, based on the second position error, second control information for adjusting the position of the second boom. The apparatus 200 may further be configured to use the positions of the booms for compensating the error in the kinematic model.

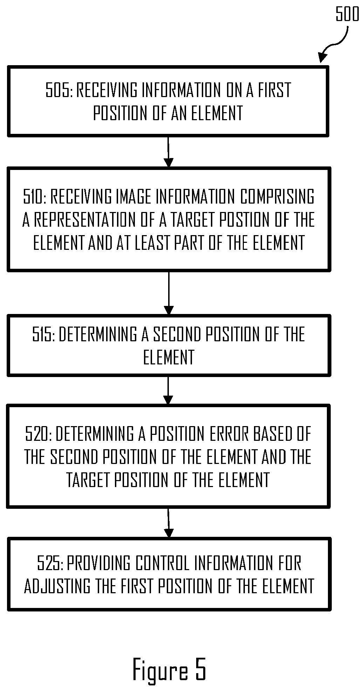

Figure 5 illustrates an example method 500 incorporating aspects of the previously disclosed embodiments. More specifically, the example method 500 illustrates a method for controlling a mobile mining machine comprising a carrier and at least one boom configured to position at least one element based on a pre-programmed automation sequence. The method 500 may comprise a computer-implemented method performed by the apparatus 200.

The method starts with receiving 505 information on a first position of an element positioned by a boom based on a pre-programmed automation sequence.

In the example of Figure 5, the first position comprises a position determined using a kinematic model of the mobile mining machine and measurement data from at least one sensor associated with the mobile mining machine.

The element may comprise an element relating to the pre-programmed automation sequence such as a drill bit, a lifter tube or a bolt.

The method continues with receiving 510 image information comprising a representation of a target position of the element and at least part of the element. The image information may comprise, for example, a video feed from a camera or one or more images captured by the camera.

Receiving image information may also comprise processing the image information. In the example of Figure 5, receiving the image information comprises analyzing the image information using a machine vision algorithm. A machine vision algorithm may comprise, for example, a neural network.

In the example of Figure 5, the target position of the element comprises an existing hole and the element is to be placed in the hole. An existing hole may comprise a drilled hole or an artificial hole. An existing hole may comprise, for example, a hole drilled into rock and an artificial hole may comprise, for example, a hole in a drill bit holder.

The method continues with determining 515, based on the image information, a second position of the element and a target position of the element. The apparatus 200 may be configured to determine the second position in response to a determination that the first position is within a threshold distance from the target position.

The method continues with determining 520 a position error based on the second position of the element and the target position of the element.

In the example of Figure 5, the position error comprises a parameter value indicating a misplacement of the element with respect to the target position of the element.

The method further continues with providing 525, based on the position error, control information for adjusting the first position of the element until at least one criterion for proceeding with the pre-programmed automation sequence is fulfilled.

The at least one criterion may relate to the position of the element or the aim of the pre-programmed automation sequence.

In the example of Figure 5, the at least one criterion comprises that a position of the element corresponds to the target position, or an operation is completed. A completed operation may comprise, for example, a successfully changed drill bit, a successfully installed lifter tube or a successfully bolted bolt.

Without limiting the scope of the claims, an advantage of determining a position error based on a second position of the element and a target position of the element, and providing, based on the position error, control information for adjusting the first position of the element is that feedback between the calculated position and the actual position may be provided.

Without in any way limiting the scope, interpretation, or application of the claims appearing below, a technical effect of one or more of the example embodiments disclosed herein is that face drilling, cross-cut drilling and lifter tube installation accuracy is improved. Another technical effect is that the position error may be used for compensating for the error in the kinematic model.

As used in this application, the term "circuitry" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Embodiments of the present invention may be implemented in software, hardware, application logic or a combination of software, hardware and application logic. The software, application logic and/or hardware may reside on the apparatus, a separate device or a plurality of devices. If desired, part of the software, application logic and/or hardware may reside on the apparatus, part of the software, application logic and/or hardware may reside on a separate device, and part of the software, application logic and/or hardware may reside on a plurality of devices. In an example embodiment, the application logic, software or an instruction set is maintained on any one of various conventional computer-readable media. In the context of this document, a 'computer-readable medium' may be any media or means that can contain, store, communicate, propagate or transport the instructions for use by or in connection with an instruction execution system, apparatus, or device, such as a computer, with one example of a computer described and depicted in FIGURE 2. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the above-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It will be obvious to a person skilled in the art that, as the technology advances, the inventive concept can be implemented in various ways. The invention and its embodiments are not limited to the examples described above but may vary within the scope of the claims.

## Claims

1. An apparatus (100, 200) for controlling a mobile mining machine (410) comprising a carrier and at least one boom (450) configured to position at least one element (440) based on a pre-programmed automation sequence, the apparatus comprising at least one processor (110) and at least one memory (160) including computer program code (120), the at least one memory (160) and the computer program code (120) configured to with the at least one processor (110), cause the apparatus at least to:
receive information on a first position (430) of an element (440) positioned by a boom (450) based on a pre-programmed automation sequence;
receive image information comprising a representation of a target position of the element (440) and at least part of the element (440);
determine, based on the image information, a second position (420) of the element (440) and the target position (470) of the element (440);
determine a position error (460) based on the second position (420) of the element (440) and the target position (470) of the element (440), the position error (460) comprising a parameter value indicating a misplacement of the element (440) with respect to the target position of the element (440); and
provide, based on the position error (460), control information for adjusting the first position (430) of the element (440) until at least one criterion for proceeding with the pre-programmed automation sequence is fulfilled.

2. The apparatus (100, 200) according to claim 1, wherein the at least one memory (160) and the computer program code (120) are further configured to with the at least one processor (110), cause the apparatus to determine the second position (420) in response to a determination that the first position (430) is within a threshold distance from the target position.

3. The apparatus (100, 200) according to claim 1 or 2, wherein the target position (470) of the element (440) comprises an existing hole and the element (440) is to be placed in the hole.

4. The apparatus (100, 200) according to claim 3, wherein the existing hole comprises a drilled hole or an artificial hole.

5. The apparatus (100, 200) according to any preceding claim, wherein the at least one memory (160) and the computer program code (120) are further configured to with the at least one processor (110), cause the apparatus (100, 200) to analyze image information using a machine vision algorithm.

6. The apparatus (100, 200) according to any preceding claim, wherein the first position (430) comprises a position determined using a kinematic model of the mobile mining machine and measurement data from at least one sensor associated with the mobile mining machine.

7. The apparatus (100, 200) according to any preceding claim, wherein the at least one element (440) comprises a drill bit, a lifter tube or a bolt.

8. The apparatus (100, 200) according to any preceding claim, wherein the at least one memory (160) and the computer program code (120) are further configured to with the at least one processor (110), cause the apparatus (100, 200) to determine the control information based on the image information.

9. The apparatus (100, 200) according to any preceding claim, wherein the at least one memory (160) and the computer program code (120) are further configured to with the at least one processor (110), cause the apparatus (100, 200) to control at least one actuator using the control information.

10. The apparatus (100, 200) according to any preceding claim, the at least one memory (160) and the computer program code (120) are further configured to with the at least one processor (110), cause the apparatus (100, 200) to determine, based on the image information, that the at least one criterion is fulfilled.

11. The apparatus (100, 200) according to any preceding claim, wherein the at least one criterion comprises that a position of the element (440) corresponds to the target position or an operation is completed.

12. The apparatus (100, 200) according to any preceding claim, wherein the at least one memory (160) and the computer program code (120) are further configured to with the at least one processor (110), cause the apparatus (100, 200) to perform, concurrently with receiving image information, at least one operation affecting at least one of the following: the second position (420) of the element (440) or the target position of the element (440).

13. A drilling rig (410) comprising an apparatus (100, 200) according to any preceding claim.

14. A method (500) for controlling a mobile mining machine comprising a carrier and at least one boom (450) configured to position at least one element (440) based on a pre-programmed automation sequence, the method comprising:
receiving (505) information on a first position (430) of an element (440) positioned by a boom (450) based on a pre-programmed automation sequence;
receiving (510) image information comprising a representation of a target position of the element (440) and at least part of the element (440);
determining (515), based on the image information, a second position (420) of the element (440) and a target position of the element (440);
determining (520) a position error (460) based on the second position (420) of the element (440) and the target position of the element (440), the position error (460) comprising a parameter value indicating a misplacement of the element (440) with respect to the target position of the element (440); and
providing (525), based on the position error (460), control information for adjusting the first position (430) of the element (440) until at least one criterion for proceeding with the pre-programmed automation sequence is fulfilled.

15. A computer program (120) comprising instructions for causing an apparatus (100, 200) to perform at least the following:
receiving information on a first position (430) of an element (440) positioned by a boom (450) based on a pre-programmed automation sequence;
receiving image information comprising a representation of a target position of the element (440) and at least part of the element (440);
determining, based on the image information, a second position (420) of the element (440) and a target position of the element (440);
determining a position error (460) based on the second position (420) of the element (440) and the target position of the element (440), the position error (460) comprising a parameter value indicating a misplacement of the element (440) with respect to the target position of the element (440); and
providing, based on the position error (460), control information for adjusting the first position (430) of the element (440) until at least one criterion for proceeding with the pre-programmed automation sequence is fulfilled.

## Patentansprüche

1. Einrichtung (100, 200) zum Steuern einer mobilen Bergbaumaschine (410), die einen Träger und mindestens einen Ausleger (450) umfasst, der konfiguriert ist, um mindestens ein Element (440) basierend auf einer vorprogrammierten Automatisierungssequenz zu positionieren, wobei die Einrichtung mindestens einen Prozessor (110) und mindestens einen Speicher (160) umfasst, der einen Computerprogrammcode (120) beinhaltet, wobei der mindestens eine Speicher (160) und der Computerprogrammcode (120) konfiguriert sind, um mit dem mindestens einen Prozessor (110) die Einrichtung zumindest zu veranlassen:
Informationen über eine erste Position (430) eines Elements (440), das von einem Ausleger (450) basierend auf einer vorprogrammierten Automatisierungssequenz positioniert wird, zu empfangen;
Bildinformationen, die eine Darstellung einer Zielposition des Elements (440) und zumindest eines Teils des Elements (440) umfassen, zu empfangen;
basierend auf den Bildinformationen eine zweite Position (420) des Elements (440) und die Zielposition (470) des Elements (440) zu bestimmen;
einen Positionsfehler (460) basierend auf der zweiten Position (420) des Elements (440) und der Zielposition (470) des Elements (440) zu bestimmen, wobei der Positionsfehler (460) einen Parameterwert umfasst, der eine Fehlplatzierung des Elements (440) in Bezug auf die Zielposition des Elements (440) angibt; und
basierend auf dem Positionsfehler (460) Steuerinformationen zum Anpassen der ersten Position (430) des Elements (440) bereitzustellen, bis mindestens ein Kriterium zum Fortfahren mit der vorprogrammierten Automatisierungssequenz erfüllt ist.

2. Einrichtung (100, 200) nach Anspruch 1, wobei der mindestens eine Speicher (160) und der Computerprogrammcode (120) weiter konfiguriert sind, um mit dem mindestens einen Prozessor (110) die Einrichtung zu veranlassen, die zweite Position (420) als Reaktion auf eine Bestimmung zu bestimmen, dass die erste Position (430) innerhalb einer Schwellendistanz von der Zielposition liegt.

3. Einrichtung (100, 200) nach Anspruch 1 oder 2, wobei die Zielposition (470) des Elements (440) ein vorhandenes Loch umfasst und das Element (440) in dem Loch zu platzieren ist.

4. Einrichtung (100, 200) nach Anspruch 3, wobei das vorhandene Loch ein Bohrloch oder ein künstliches Loch umfasst.

5. Einrichtung (100, 200) nach einem vorstehenden Anspruch, wobei der mindestens eine Speicher (160) und der Computerprogrammcode (120) weiter konfiguriert sind, um mit dem mindestens einen Prozessor (110) die Einrichtung (100, 200) zu veranlassen, Bildinformationen unter Verwendung eines Algorithmus zur maschinellen Bilderkennung zu analysieren.

6. Einrichtung (100, 200) nach einem vorstehenden Anspruch, wobei die erste Position (430) eine Position umfasst, die unter Verwendung eines kinematischen Modells der mobilen Bergbaumaschine und von Messdaten von mindestens einem mit der mobilen Bergbaumaschine verknüpften Sensor bestimmt wird.

7. Einrichtung (100, 200) nach einem vorstehenden Anspruch, wobei das mindestens eine Element (440) einen Bohrer, ein Heberohr oder einen Bolzen umfasst.

8. Einrichtung (100, 200) nach einem vorstehenden Anspruch, wobei der mindestens eine Speicher (160) und der Computerprogrammcode (120) weiter konfiguriert sind, um mit dem mindestens einen Prozessor (110) die Einrichtung (100, 200) zu veranlassen, die Steuerinformationen basierend auf den Bildinformationen zu bestimmen.

9. Einrichtung (100, 200) nach einem vorstehenden Anspruch, wobei der mindestens eine Speicher (160) und der Computerprogrammcode (120) weiter konfiguriert sind, um mit dem mindestens einen Prozessor (110) die Einrichtung (100, 200) zu veranlassen, die mindestens eine Betätigungsvorrichtung unter Verwendung der Steuerinformationen zu steuern.

10. Einrichtung (100, 200) nach einem vorstehenden Anspruch, wobei der mindestens eine Speicher (160) und der Computerprogrammcode (120) weiter konfiguriert sind, um mit dem mindestens einen Prozessor (110) die Einrichtung (100, 200) zu veranlassen, basierend auf den Bildinformationen zu bestimmen, dass das mindestens eine Kriterium erfüllt ist.

11. Einrichtung (100,200) nach einem vorstehenden Anspruch, wobei das mindestens eine Kriterium umfasst, dass eine Position des Elements (440) der Zielposition entspricht oder ein Vorgang abgeschlossen ist.

12. Einrichtung (100,200) nach einem vorstehenden Anspruch, wobei der mindestens eine Speicher (160) und der Computerprogrammcode (120) weiter konfiguriert sind, um mit dem mindestens einen Prozessor (110) die Einrichtung (100, 200) zu veranlassen, gleichzeitig mit dem Empfangen von Bildinformationen mindestens einen Vorgang auszuführen, der mindestens eines der Folgenden beeinflusst: die zweite Position (420) des Elements (440) oder die Zielposition des Elements (440).

13. Bohranlage (410), die eine Einrichtung (100,200) nach einem vorstehenden Anspruch umfasst.

14. Verfahren (500) zum Steuern einer mobilen Bergbaumaschine, die einen Träger und mindestens einen Ausleger (450) umfasst, der konfiguriert ist, um mindestens ein Element (440) basierend auf einer vorprogrammierten Automatisierungssequenz zu positionieren, wobei das Verfahren umfasst:
Empfangen (505) von Informationen über eine erste Position (430) eines Elements (440), das von einem Ausleger (450) basierend auf einer vorprogrammierten Automatisierungssequenz positioniert wird;
Empfangen (510) von Bildinformationen, die eine Darstellung einer Zielposition des Elements (440) und zumindest eines Teils des Elements (440) umfassen;
Bestimmen (515), basierend auf den Bildinformationen, einer zweiten Position (420) des Elements (440) und einer Zielposition des Elements (440);
Bestimmen (520) eines Positionsfehlers (460) basierend auf der zweiten Position (420) des Elements (440) und der Zielposition des Elements (440), wobei der Positionsfehler (460) einen Parameterwert umfasst, der eine Fehlplatzierung des Elements (440) in Bezug auf die Zielposition des Elements (440) angibt; und
Bereitstellen (525), basierend auf dem Positionsfehler (460), von Steuerinformationen zum Anpassen der ersten Position (430) des Elements (440), bis mindestens ein Kriterium zum Fortfahren mit der vorprogrammierten Automatisierungssequenz erfüllt ist.

15. Computerprogramm (120), das Anweisungen zum Veranlassen einer Einrichtung (100, 200) umfasst, zumindest Folgendes auszuführen:
Empfangen von Informationen über eine erste Position (430) eines Elements (440), das von einem Ausleger (450) basierend auf einer vorprogrammierten Automatisierungssequenz positioniert wird;
Empfangen von Bildinformationen, die eine Darstellung einer Zielposition des Elements (440) und zumindest eines Teils des Elements (440) umfassen;
Bestimmen, basierend auf den Bildinformationen, einer zweiten Position (420) des Elements (440) und einer Zielposition des Elements (440);
Bestimmen eines Positionsfehlers (460) basierend auf der zweiten Position (420) des Elements (440) und der Zielposition des Elements (440), wobei der Positionsfehler (460) einen Parameterwert umfasst, der eine Fehlplatzierung des Elements (440) in Bezug auf die Zielposition des Elements (440) angibt; und
Bereitstellen, basierend auf dem Positionsfehler (460), von Steuerinformationen zum Anpassen der ersten Position (430) des Elements (440), bis mindestens ein Kriterium zum Fortfahren mit der vorprogrammierten Automatisierungssequenz erfüllt ist.

## Revendications

1. Appareil (100, 200) pour commander une machine d'exploitation minière mobile (410) comprenant un support et au moins une flèche (450) configurée pour positionner au moins un élément (440) sur la base d'une séquence d'automatisation préprogrammée, l'appareil comprenant au moins un processeur (110) et au moins une mémoire (160) incluant un code de programme informatique (120), la au moins une mémoire (160) et le code de programme informatique (120) étant configurés, avec le au moins un processeur (110), pour amener l'appareil au moins à :
recevoir des informations sur une première position (430) d'un élément (440) positionné par une flèche (450) sur la base d'une séquence d'automatisation préprogrammée ;
recevoir des informations d'image comprenant une représentation d'une position cible de l'élément (440) et d'au moins une partie de l'élément (440) ;
déterminer, sur la base des informations d'image, une seconde position (420) de l'élément (440) et la position cible (470) de l'élément (440) ;
déterminer une erreur de position (460) sur la base de la seconde position (420) de l'élément (440) et de la position cible (470) de l'élément (440), l'erreur de position (460) comprenant une valeur de paramètre indiquant un mauvais positionnement de l'élément (440) par rapport à la position cible de l'élément (440) ; et
fournir, sur la base de l'erreur de position (460), des informations de commande pour ajuster la première position (430) de l'élément (440) jusqu'à ce qu'au moins un critère de poursuite de la séquence d'automatisation préprogrammée soit rempli.

2. Appareil (100, 200) selon la revendication 1, dans lequel la au moins une mémoire (160) et le code de programme informatique (120) sont en outre configurés, avec le au moins un processeur (110), pour amener l'appareil à déterminer la seconde position (420) à la suite d'une détermination que la première position (430) se trouve à une distance seuil de la position cible.

3. Appareil (100, 200) selon la revendication 1 ou 2, dans lequel la position cible (470) de l'élément (440) comprend un trou existant et l'élément (440) doit être placé dans le trou.

4. Appareil (100, 200) selon la revendication 3, dans lequel le trou existant comprend un trou percé ou un trou artificiel.

5. Appareil (100, 200) selon une quelconque revendication précédente, dans lequel la au moins une mémoire (160) et le code de programme informatique (120) sont en outre configurés, avec le au moins un processeur (110), pour amener l'appareil (100, 200) à analyser des informations d'image à l'aide d'un algorithme de vision artificielle.

6. Appareil (100, 200) selon une quelconque revendication précédente, dans lequel la première position (430) comprend une position déterminée à l'aide d'un modèle cinématique de la machine d'exploitation minière mobile et de données de mesure provenant d'au moins un capteur associé à la machine d'exploitation minière mobile.

7. Appareil (100, 200) selon une quelconque revendication précédente, dans lequel le au moins un élément (440) comprend un foret, un tube de levage ou un boulon.

8. Appareil (100, 200) selon une quelconque revendication précédente, dans lequel la au moins une mémoire (160) et le code de programme informatique (120) sont en outre configurés, avec le au moins un processeur (110), pour amener l'appareil (100, 200) à déterminer les informations de commande sur la base des informations d'image.

9. Appareil (100, 200) selon une quelconque revendication précédente, dans lequel la au moins une mémoire (160) et le code de programme informatique (120) sont en outre configurés, avec le au moins un processeur (110), pour amener l'appareil (100, 200) à commander au moins un actionneur à l'aide des informations de commande.

10. Appareil (100, 200) selon une quelconque revendication précédente, la au moins une mémoire (160) et le code de programme informatique (120) sont en outre configurés pour, avec le au moins un processeur (110), amener l'appareil (100, 200) à déterminer, sur la base des informations d'image, que le au moins un critère est rempli.

11. Appareil (100, 200) selon une quelconque revendication précédente, dans lequel le au moins un critère comprend qu'une position de l'élément (440) correspond à la position cible ou qu'une opération est terminée.

12. Appareil (100, 200) selon une quelconque revendication précédente, dans lequel la au moins une mémoire (160) et le code de programme informatique (120) sont en outre configurés pour, avec le au moins un processeur (110), amener l'appareil (100, 200) à effectuer, simultanément à la réception d'informations d'image, au moins une opération affectant au moins l'une : de la seconde position (420) de l'élément (440) ou de la position cible de l'élément (440).

13. Appareil de forage (410) comprenant un appareil (100, 200) selon une quelconque revendication précédente.

14. Procédé (500) pour commander une machine d'exploitation minière mobile comprenant un support et au moins une flèche (450) configurée pour positionner au moins un élément (440) sur la base d'une séquence d'automatisation préprogrammée, le procédé comprenant :
la réception (505) d'informations sur une première position (430) d'un élément (440) positionné par une flèche (450) sur la base d'une séquence d'automatisation préprogrammée ;
la réception (510) d'informations d'image comprenant une représentation d'une position cible de l'élément (440) et d'au moins une partie de l'élément (440) ;
la détermination (515), sur la base des informations d'image, d'une seconde position (420) de l'élément (440) et d'une position cible de l'élément (440) ;
la détermination (520) d'une erreur de position (460) sur la base de la seconde position (420) de l'élément (440) et de la position cible de l'élément (440), l'erreur de position (460) comprenant une valeur de paramètre indiquant un mauvais positionnement de l'élément (440) par rapport à la position cible de l'élément (440) ; et
la fourniture (525), sur la base de l'erreur de position (460), d'informations de commande pour ajuster la première position (430) de l'élément (440) jusqu'à ce qu'au moins un critère de poursuite de la séquence d'automatisation préprogrammée soit rempli.

15. Programme informatique (120) comprenant des instructions pour amener un appareil (100, 200) à effectuer au moins ce qui suit :
la réception d'informations sur une première position (430) d'un élément (440) positionné par une flèche (450) sur la base d'une séquence d'automatisation préprogrammée ;
la réception d'informations d'image comprenant une représentation d'une position cible de l'élément (440) et d'au moins une partie de l'élément (440) ;
la détermination, sur la base des informations d'image, d'une seconde position (420) de l'élément (440) et d'une position cible de l'élément (440) ;
la détermination d'une erreur de position (460) sur la base de la seconde position (420) de l'élément (440) et de la position cible de l'élément (440), l'erreur de position (460) comprenant une valeur de paramètre indiquant un mauvais positionnement de l'élément (440) par rapport à la position cible de l'élément (440) ; et
la fourniture, sur la base de l'erreur de position (460), d'informations de commande pour ajuster la première position (430) de l'élément (440) jusqu'à ce qu'au moins un critère de poursuite de la séquence d'automatisation préprogrammée soit rempli.
